# EUROPÄISCHE PATENTANMELDUNG

(11) **EP 0 937 558 A1**
(43) Veröffentlichungstag der Anmeldung: **25.08.1999**
(21) Anmeldenummer: 99101245.1
(22) Anmeldetag: 23.01.1999
(51) Int. Cl.: B29B 9/06, B29C 47/30, B01J 2/20, B29C 47/86

(54) **Granulierscheibe**

(30) Priorität: 19.02.1998 DE 29802881 U
(71) Anmelder: Widia GmbH, 45145 Essen (DE)
(72) Erfinder: Ongsiek, Uwe, 46282 Dorsten (DE); Van der Burg, Petrus Johannes Maria, 7772 MS Hardenberg (NL); Reints, Bert, 7695 SH Bruchterveld (NL)
(74) Vertreter: Vomberg, Friedhelm, Dipl.-Phys.

(57) **Zusammenfassung**

Die Erfindung betrifft eine Granulierscheibe, bestehend aus einem beheizbaren Formkörper mit mehreren Lochbohrungen, durch die fließfähige Thermoplaste, insbesondere im Rahmen eines Unterwassergranulierverfahrens durchführbar sind.

Erfindungsgemäß besteht die Granulierscheibe aus einer Lochbohrungen (31) aufweisenden Stahlplatte (20) und einer hiermit verspannten, ebenfalls Lochbohrungen (33, 34) aufweisenden Hartmetallplatte (21), wobei sowohl die Lochbohrungen (31) der Stahlplatte (20) als auch die Lochbohrungen (33, 34) der Hartmetallplatte (21) deckungsgleich zueinander angeordnet sind.

## Beschreibung

Die Erfindung betrifft eine Granulierscheibe, bestehend aus einem beheizbaren Formkörper mit mehreren Lochbohrungen, durch die fließfähige Thermoplaste, insbesondere im Rahmen eines Unterwassergranulierverfahrens durchführbar sind.

Granulierverfahren werden insbesondere beim Recycling von thermoplastischem Kunststoff verwendet. Hierunter fallen beispielsweise Polyethylen, Polypropylen, Polystyrol, Weich-PVC, ABS und weitere Polymere. Durch Kunststoffe werden in einen Extruder, eine Schmelzpumpe, einen Siebwechsel oder eine Anfahrweiche einer beheizbaren Granulierscheibe zugeführt, durch deren Bohrungen sie hindurchgepreßt und dabei verdichtet werden. Hinter der Granulierscheibe wird das Material mittels rotierender Messer im Wasserstrom abgeschlagen. Durch den Wasserstrom wird das Kunststoffgranulat angehärtet und gleichzeitig abtransportiert, wonach das Wasser-Granulatgemisch vorentwässert und anschließend, z.B. in einer Zentrifuge getrocknet wird. Das rückgewonnene Wasser kann nach Filterung und Temperierung in den Prozeßkreislauf zurückgeführt werden.

Die nach dem Stand der Technik bekannten Granulierscheiben sind ein- oder mehrteilig und bestehen entweder aus gehärtetem und/oder mit einer korrosionsfesten Beschichtung überzogenen Stahl oder aus einem Stahlkörper mit Bohrungen, in welche zylindrische Hartmetalleinsätze mit korrosionsbeständigen Sonderloten eingelötet sind. Die Hartmetalleinsätze haben den großen Vorteil, verschleißbeständiger als gehärtete unbeschichtete oder beschichtete Stähle zu sein. Allerdings wird dieser Vorteil mit folgenden Nachteilen erkauft:

Um paßgenaue Hartmetallzylinder bzw. Bohrungen im Stahlkörper zu fertigen, sind aufwendige Verfahren erforderlich. Darüber hinaus besitzen Hartmetallkörper einerseits und Stahlgrundkörper andererseits unterschiedliche Wärmeausdehnungskoeffizienten, so daß Wärmespannungen unvermeidbar sind. Werden die Hartmetallzylinder in die betreffenden Bohrungen des Stahlkörpers eingelötet, kann es bereits temperaturbedingt zu einem Verzug der Granulierscheibe mit der Folge einer Spaltbildung zwischen dem Stahl und dem Hartmetall kommen. Eine solche Spaltbildung zwischen den Hartmetallzylinderkörpern und der Stahlscheibe hat wiederum zur Folge, daß beim Abschneiden des warmen Thermoplastes Lotmaterial ausgewaschen wird und Hartmetallzylinderkörper gelöst werden, was zu Beschädigungen der rotierenden Messer in Form von Ausbröckelungen an deren Schneiden führen kann, wonach die Messer schließlich ausgetauscht werden müssen. Darüber hinaus können solche Wärmespannungen zu Rißbildungen in dem Stahlkörper zwischen zwei Löchern führen, die ein funktionsgerechtes Verdichten des erwärmten Thermoplastes durch die Granulierscheibe hindern, insbesondere kann es zur Schmierbildung und zum Verkleben des Granulates sowie schließlich zu einem unerwünschten Stau der Kunststoffmasse vor der Granulierscheibe kommen.

Es ist daher Aufgabe der vorliegenden Erfindung, eine Granulierscheibe der eingangs genannten Art zu verbessern, welche die vorgenannten Nachteile vermeidet.

Zur Lösung dieser Aufgabe wird die Granulierscheibe gemäß Anspruch 1 vorgeschlagen, die aus einer Lochbohrungen aufweisenden Stahlplatte und einer hiermit verspannten, ebenfalls Lochbohrungen aufweisenden Hartmetallplatte besteht, wobei im wesentlichen sowohl die Lochbohrungen der Stahlplatte als auch die Lochbohrungen der Hartmetallplatte deckungsgleich zueinander angeordnet sind. Die Trennung der Granulierscheibe in einen Stahlplatten- und einen Hartmetallplatten-Teil, die jeweils an der flachen Stirnseite aneinanderliegen, beseitigt das Problem auftretender Wärmespannungen. Der Stahl sowie das Hartmetall können den jeweiligen Verfahrensbedingungen optimal angepaßt werden, wobei insbesondere durch entsprechende Formgebungen der Lochbohrungen in der Hartmetallplatte der Bereich der Verdichtungszone in den Hartmetallteil verlegt wird. Ferner lassen sich verschiedene Wärmeausdehnungskoeffizienten besser ausgleichen als bei bisher nach dem Stand der Technik bekannten Lösungen. Ggf. läßt sich auch entweder die Stahlplatte oder die Hartmetallplatte weiter verwenden, wenn der jeweils andere Plattenteil verschlissen ist. Vorzugsweise wird die Hartmetallplatte austrittsseitig angeordnet.

Weiterbildungen der Erfindung sind in den Unteransprüchen beschrieben.

Nach einer ersten Ausgestaltung der Erfindung besitzen die Lochbohrungen der Hartmetallplatte auf der der Stahlplatte zugewandten Seite einen Einlauftrichter, dessen größerer Durchmesser gleich groß wie der vorzugsweise über die gesamte Länge konstante Durchmesser der Lochbohrungen der Stahlplatte ist. Hierdurch wird erreicht, daß die durch die Granulierscheibe gewünschte Verdichtung der Thermoplaste ausschließlich im Bereich der verschleißbeständigeren Hartmetallplatten-Bohrungen vollzogen wird.

Nach einer weiteren Ausbildung der Erfindung und zur Erzeugung eines möglichst laminar austretenden Thermoplaststranges an der Ausgangsseite der Granulierscheibe sind die Lochbohrungen der Hartmetallplatte nur über einen Teil konisch ausgeführt, d.h., der Einlauftrichter der Lochbohrungen der Hartmetallplatte mündet ist eine Bohrung mit konstantem Durchmesser an der Austrittsseite der Granulierscheibe. Die durch den Einlauftrichter gegebene Durchmesserverjüngung der Lochbohrung der Hartmetallscheibe kann z.B. 60 bis 80 %, aber auch bis zu 120° betragen.

Weiterhin kann z.B. die Höhe des Einlauftrichters bezogen auf die gesamte Lochbohrungshöhe, das ist die Hartmetallscheibendicke, 30 bis 40 % betragen.

In einer weiteren Ausführungsform der Erfindung sind die Lochbohrungen der Hartmetallplatte und der Stahlplatte konzentrisch zu den Plattenmittelpunkten angeordnet, insbesondere in mehreren konzentrisch zum Plattenmittelpunkt liegenden Reihen. So können z.B. ein oder mehr konzentrische "Ringe" von Bohrungen vorgesehen sein, wobei von Ring zu Ring die Bohrungen gegeneinander versetzt angeordnet sind, wodurch das Abschneiden der Thermoplaste erleichtert wird.

Grundsätzlich können die Stahlplatte und die Hartmetallplatte durch beliebige nach dem Stand der Technik verfügbare Spannmittel miteinander befestigt werden. Bevorzugt werden jedoch die Stahlplatte und die Hartmetallplatte über mindestens einen Haltering miteinander verbunden, insbesondere bei den vorbeschriebenen konzentrisch angeordneten Lochbohrungen in der Weise, daß ein innerer Ring und ein äußerer Ring verwendet werden, worüber die Stahlplatte und die Hartmetallplatte mittels Schrauben befestigt werden. Der Haltering oder die Halteringe bestehen vorzugsweise aus gehärtetem Stahl, wobei die Stahlplatte sowie die Halteringe gehärtet sein können und ggf. eine korrosionsbeständige Oberflächenbeschichtung aufweisen.

Ein Ausführungsbeispiel der Erfindung ist in den Zeichnungen dargestellt. Es zeigen
- Fig. 1: eine Draufsicht auf eine erfindungsgemäße Granulierplatte,
- Fig. 2: einen Schnitt entlang der Linie II - II in Fig. 1,
- Fig. 3: einen Schnitt entlang der Linie III - III in Fig. 1,
- Fig. 4: eine Draufsicht auf die Stahl-Grundplatte,
- Fig. 5: einen Schnitt entlang der Linie V - V in Fig. 4,
- Fig. 6: einen Schnitt entlang einer ringförmigen Bahn mit mehreren Lochbohrungen,
- Fig. 7: eine Draufsicht auf eine Hartmetallscheibe,
- Fig. 8: einen Schnitt entlang der Linie VIII - VIII in Fig. 7,
- Fig. 9: eine Draufsicht auf den inneren Haltering,
- Fig. 10: einen Schnitt entlang der Linie X - X in Fig. 9,
- Fig. 11: eine Draufsicht auf einen äußeren Haltering und
- Fig. 12: einen Schnitt entlang der Linie XII - XII in Fig. 11.

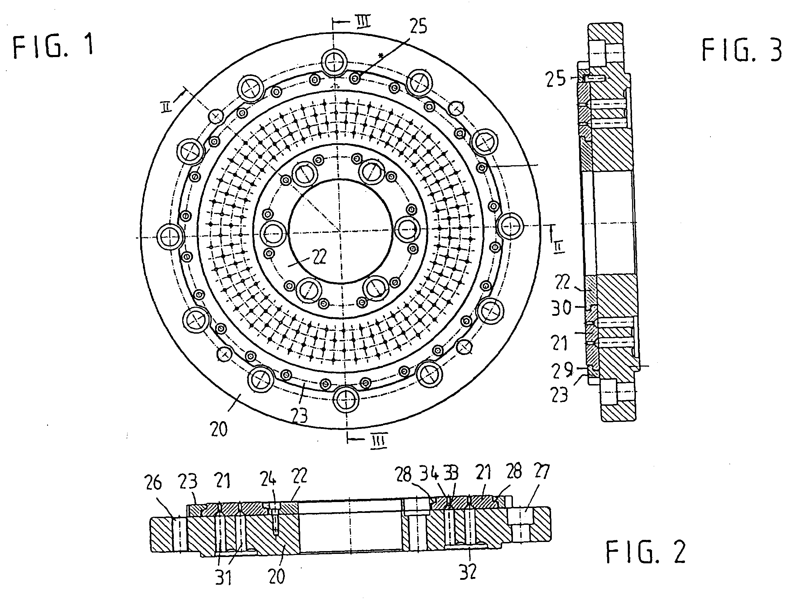

Die in Fig. 1 bis 3 dargestellte Granulierscheibe besteht aus einer kreisrunden Stahlscheibe 20 sowie einer Hartmetallscheibe 21 mit geringerem Durchmesser. Die Scheiben 20 und 21 sind mittels eines inneren Halteringes 22 und eines äußeren Halteringes 23 jeweils über Schrauben 24 bzw. 25 aneinander befestigt. Sowohl die Stahlplatte als auch die Hartmetallplatte sind im vorliegenden Fall ringförmig ausgeführt und besitzen weitere Bohrungen 26 bis 28 zur Schraubbefestigung an einem Extruderausgang sowie einem Messeraufsatz. Im vorliegenden Fall besitzt die Hartmetallscheibe 21 jeweils an der Ringinnen- wie an der Ringaußenseite einen Absatz 28, der von einem entsprechend ausgeformten Vorsprung 29 bzw. 30 des inneren bzw. äußeren Halteringes 22, 23 übergriffen wird.

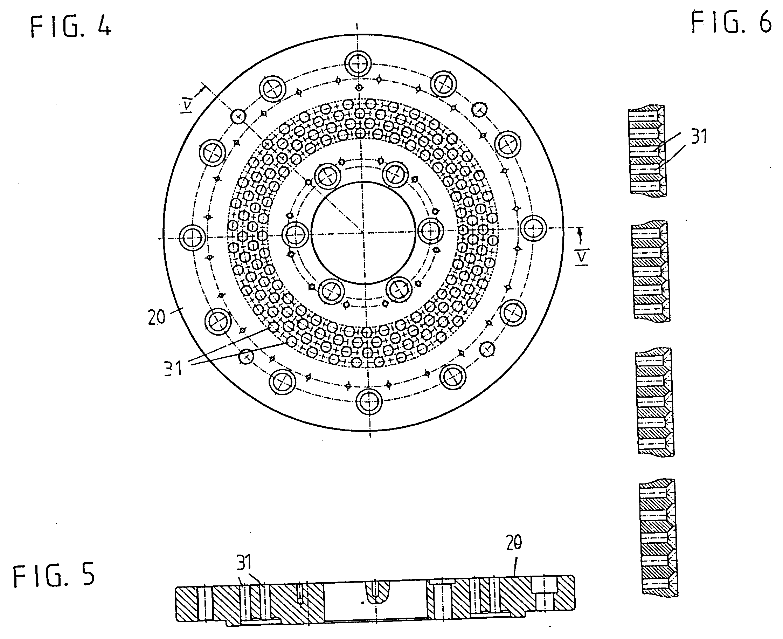

Die Lochbohrungen 31 der Stahlplatte haben, abgesehen von einem Einlaufbereich 32 über die gesamte Dicke der Stahlplatte einen konstanten Durchmesser, wohingegen die Lochbohrungen der Hartmetallplatte einen Einlauftrichter 33 sowie einen Bohrungsbereich 34 mit konstantem Durchmesser besitzen. Das fließfähige Thermoplast wird bezogen auf Fig. 2 von unten nach oben durch die Granulierscheibe hindurchgeführt. Wie im Detail anhand der Fig. 4 bis 6 ersichtlich, weist die ringförmige Stahlplatte konzentrisch angeordnete Reihen von Lochbohrungen 31 auf, die von Ring zu Ring versetzt gegeneinander angeordnet sind. Die Größe der Stahlplatte 20 sowie der Durchmesser der Lochbohrungen, die Anzahl der Lochbohrungen und deren Anordnung sind auf das zu verarbeitende Produkt abgestimmt.

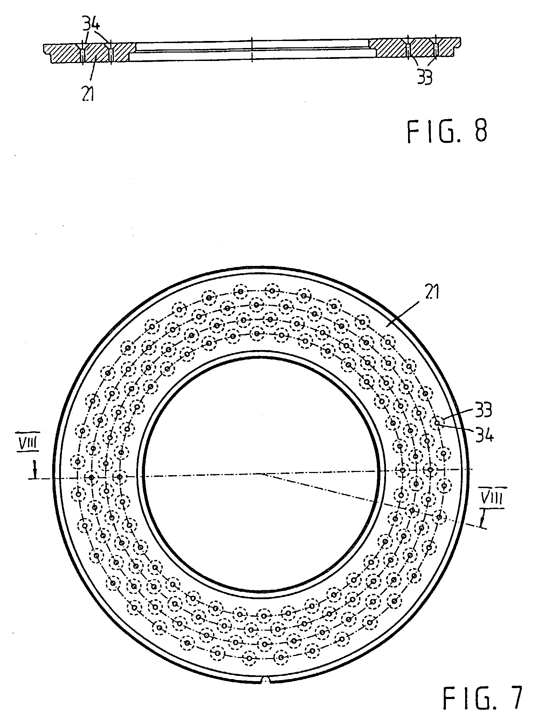

Entsprechendes gilt hinsichtlich der in Fig. 7 und 8 dargestellten Hartmetallplatte 21, die entsprechend ausgebildete ringförmig angeordnete Reihen von Bohrungen 33, 34 aufweist, die deckungsgleich zu den jeweils korrespondierenden Bohrungen 31 der Stahlplatte angeordnet sind.

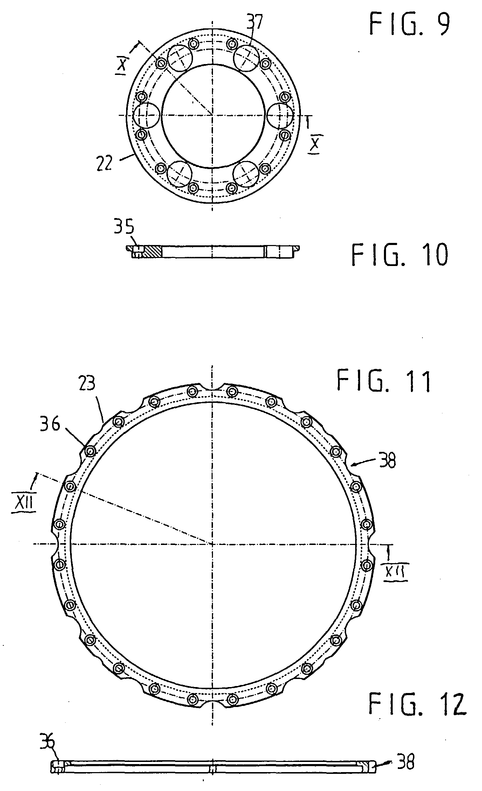

Eine detaillierte Darstellung des inneren Halteringes zeigen Fig. 9 und 10 sowie des äußeren Halteringes Fig. 11 und 12. Zum Verspannen der Halteringe 22, 23 mit der Stahlplatte 20 und der Hartmetallplatte 21 besitzen diese Bohrungen 35, 36 zur Aufnahme geeigneter Befestigungsschrauben. Weitere Bohrungen 37 bzw. Einkerbungen 38 erlauben die Durchführung weiterer Befestigungsschrauben für die Granulierscheibe am Extruderausgang bzw. ein aufgesetztes, nicht dargestelltes rotierendes Messer.

Die Stahlplatte 20 und die Hartmetallplatte 21 werden einteilig gefertigt, wobei die jeweiligen Lochbohrungen 33, 34 der Hartmetallplatte, die sintertechnisch hergestellt wird, im Grünkörper vor dem Sintern eingebracht werden.

## Patentansprüche

1. Granulierscheibe, bestehend aus einem beheizbaren Formkörper mit mehreren Lochbohrungen, durch die fließfähige Thermoplaste, insbesondere im Rahmen eines Unterwassergranulierverfahrens durchführbar sind,
**dadurch gekennzeichnet**,
daß die Granulierscheibe aus einer Lochbohrungen (31) aufweisenden Stahlplatte (20) und einer hiermit verspannten, ebenfalls Lochbohrungen (33, 34) aufweisenden Hartmetallplatte (21) besteht, wobei sowohl die Lochbohrungen (31) der Stahlplatte (20) als auch die Lochbohrungen (33, 34) der Hartmetallplatte (21) deckungsgleich zueinander angeordnet sind.

2. Granulierscheibe nach Anspruch 1, dadurch gekennzeichnet, daß die Lochbohrungen (33, 34) der Hartmetallplatte (21) auf der der Stahlplatte (20) zugewandten Seite einen Einlauftrichter (33) aufweisen, dessen größerer Durchmesser gleich groß wie der vorzugsweise über die gesamte Länge im wesentlichen konstante oder mittlere Durchmesser der Lochbohrungen (31) der Stahlplatte (20) ist.

3. Granulierscheibe nach Anspruch 2, dadurch gekennzeichnet, daß der Einlauftrichter (33) der Lochbohrungen der Hartmetallplatte (21) in eine Bohrung (34) mit konstantem Durchmesser mündet.

4. Granulierscheibe nach einem der Ansprüche 1 bis 3, dadurch gekennzeichnet, daß die Lochbohrungen (33, 34) der Hartmetallplatte (21) und der Stahlplatte (20) konzentrisch zu den Plattenmittelpunkten liegen, vorzugsweise in mehreren Reihen, die konzentrisch, aber zueinander versetzt zum Plattenmittelpunkt angeordnet sind, so daß das rotierende Messer die Stränge nacheinander schneiden kann.

5. Granulierscheibe nach einem der Ansprüche 1 bis 4, dadurch gekennzeichnet, daß die Stahlplatte (20) und die Hartmetallplatte (21) über mindestens einen Haltering (22, 23), vorzugsweise einen bezogen auf die Lochbohrungen inneren (22) und einen äußeren Ring (23) mittels Schrauben miteinander verbunden sind.

6. Granulierscheibe nach Anspruch 5, dadurch gekennzeichnet, daß der innere und/oder der äußere Ring (22, 23) aus Stahl bestehen.

7. Granulierscheibe nach einem der Ansprüche 1 bis 6, dadurch gekennzeichnet, daß die Stahlplatte (20) und/oder der innere und/oder der äußere Ring (22, 23) aus gehärtetem Stahl bestehen und/oder mit einer korrosionsbeständigen Oberflächenbeschichtung versehen sind.

8. Granulierscheibe nach einem der Ansprüche 1 bis 7, dadurch gekennzeichnet, daß die Halteringe aus Hartmetall, aus Stahl oder aus einem mit Hartmetall armierten Stahl bestehen.
